# EUROPÄISCHE PATENTSCHRIFT

(11) **EP 1 769 689 B1**
(45) Veröffentlichungstag und Bekanntmachung des Hinweises auf die Patenterteilung: **14.04.2010**
(21) Anmeldenummer: 06017114.7
(22) Anmeldetag: 17.08.2006
(51) Int. Cl.: A24C 5/34, G01N 21/952

(54) **Einrichtung und Verfahren zum Messen von Eigenschaften von Multisegmentfiltern oder Zusammenstellungen von Filtersegmenten**
Device and method for determining the characteristics of composed filters or assemblies of filter elements
Dispositif et procédé pour déterminer les caractéristiques de filtres composés ou d'assemblages d'éléments à filtre

(30) Priorität: 28.09.2005 DE 102005046581
(43) Veröffentlichungstag der Anmeldung: 04.04.2007
(73) Patentinhaber: Hauni Maschinenbau AG, 21033 Hamburg (DE)
(72) Erfinder: Schröder, Dierk, 22399 Hamburg (DE); Hapke, Siegfried, 21502 Geesthacht (DE)
(74) Vertreter: Seemann, Ralph

(56) Entgegenhaltungen:
- EP-A- 1 557 100
- EP-A1- 0 848 246
- WO-A-2004/083834
- DE-A1- 19 528 815
- GB-A- 2 140 915
- GB-A- 2 155 630
- GB-A- 2 179 444
- US-A- 4 212 541

## Beschreibung

### Beschreibung

Die Erfindung betrifft eine Einrichtung zur Messung von Eigenschaften von Multisegmentfiltern oder Zusammenstellungen von Filtersegmenten der Tabak verarbeitenden Industrie, wobei eine Beleuchtungsvorrichtung und ein Strahlungsempfänger vorgesehen sind, wobei mittels der Beleuchtungsvorrichtung eine im Wesentlichen längsaxial gleichmäßige Beleuchtung wenigstens eines Abschnitts eines Multisegmentfilters oder einer Zusammenstellung von Filtersegmenten ermöglicht ist. Die Erfindung betrifft ferner ein Verfahren zum Messen von Eigenschaften von Multisegmentfiltern oder Zusammenstellungen von Filtersegmenten der Tabak verarbeitenden Industrie.

Bei der Herstellung von Multisegmentfiltern, der üblicherweise eine Zusammenstellung von Filtersegmenten vorgestellt ist, können diverse Fehler auftreten, wie beispielsweise das Vertauschen von Filtersegmenten bzw. Filterbestandteilen, das Fehlen eines Filtersegments, eine falsche Position oder das Einfügen eines Filtersegments mit einer falschen Länge, eine Lücke zwischen Filtersegmenten und beispielsweise ein Filtersegment, dessen Längsachse gegen die weiteren Filtersegmente verkippt ist, beispielsweise um 90°.

Es wird durch bekannte Einrichtungen und Verfahren zur Messung von Eigenschaften von Multisegmentfiltern oder Zusammenstellungen von Filtersegmenten bzw. Verfahren zur Qualitätssicherung von Multisegmentfiltern oder Zusammenstellung von Filtersegmenten versucht, derartige Fehler aufzuspüren und die dann fehlerhaften Multisegmentfilter bzw. Zusammenstellungen von Filtersegmenten aus dem weiteren Verarbeitungsprozess auszuwerfen, damit beispielsweise keine fehlerhaften Filterzigaretten produziert werden. Multisegmentfilter sind üblicherweise Filter, die aus unterschiedlichen Filtermaterialien zusammengesetzt sind, wie beispielsweise Acetatfiltersegmente, Zellulosefiltersegmente, granulathaltige Filtersegmente, beispielsweise umfassend Aktivkohlegranulat und Ähnliches.

Aus der WO 03/055338 A2 ist eine Einrichtung zum Messen von Eigenschaften von Multisegmentfiltern der Tabak verarbeitenden Industrie im Durchstrahlverfahren bekannt, wobei eine Beleuchtungsvorrichtung und ein Strahlungsempfänger vorgesehen sind, wobei mittels der Beleuchtungsvorrichtung eine im Wesentlichen längsaxial gleichmäßige Bestrahlung eines Multisegmentfilters ermöglicht ist, wobei der Strahlungsempfänger innerhalb eines Förderelements, das zum Fördern wenigstens von Multisegmentfiltern vorgesehen ist, angeordnet ist. Außerdem ist aus diesem Dokument ein System zum Messen von Eigenschaften von stabförmigen Artikeln oder von Bestandteilen von stabförmigen Artikeln der Tabak verarbeitenden Industrie, die nachfolgend zu einem stabförmigen Artikel zusammenfügbar sind, insbesondere von Multisegmentfiltern und/oder von mit Multisegmentfiltern versehenen Filterzigaretten, bekannt, wobei eine erste Messeinrichtung vorgesehen ist, mittels der die Artikel oder Bestandteile der Artikel mit einem Reflexionsverfahren messbar sind, wobei eine zweite Messeinrichtung vorgesehen ist, mittels der die Artikel oder Bestandteile der Artikel in einem Durchstrahlverfahren messbar sind.

US 4 212 541 A offenbart die Überprüfung eines kontinuierlich vorwärts bewegten Strangs, insbesondere eines Zigarettenfilterstrangs, wobei ein annähernd senkrecht zur Filterstranglängsachse sich erstreckender Lichtstrahl in den Filterstrang eingeleitet wird. Der Lichtstrahl durchläuft den Filterstrang und wird mittels eines fotoelektronischen Bauelements, das mit einer elektrischen Auswerteschaltung verbunden ist, gemessen.

GB 2 155 630 A offenbart eine Vorrichtung zum optischen Abtasten der Oberfläche eines bewegten Zigarettenstrangs. Die Vorrichtung umfasst einen Prüfkopf mit einer Strangdurchführung, um den Strang angeordnete Lichtsender und mit einer Auswerteanordnung verbundene optoelektronische Wandler.

GB 2 140 915 A offenbart eine Vorrichtung zum optischen Abtasten der Oberfläche eines bewegten Zigarettenstrangs. Die Vorrichtung weist einen den Strang umgebenden Prüfkopf auf, in dem rings um den Strang Strahlenführungsmittel angeordnet sind. Die Strahlenführungsmittel leiten nicht auf der Strangoberfläche reflektiertes Licht und an der Strangoberfläche reflektiertes Licht zu einem optoelektrischen Wandler weiter.

GB 2 179 444 A offenbart das Prüfen der Dichte eines Faserstrangs der Tabak verarbeitenden Industrie in einer Strangführung, der eine Infrarotlichtschranke zugeordnet ist. Die Infrarotlichtschranke bzw. mehrere Infrarotlichtschranken sind in vorgegebenen Winkelabständen um die Strangführung herum radial auf diese hin ausgerichtet.

Aus WO 2004/083834 A1 sind ein Verfahren und eine Vorrichtung zur Bestimmung von einer oder mehrerer physikalischer Eigenschaften eines umhüllten Rauchartikels oder Filterstabs bekannt. Hierbei werden in einem Durchstrahlverfahren die Eigenschaften des Filterstabs bestimmt.

Es ist Aufgabe der vorliegenden Erfindung, das gattungsgemäße Verfahren und die gattungsgemäße Einrichtung derart weiter zu bilden, dass die Genauigkeit der Messung erhöht wird und damit die Qualitätskontrolle von Multisegmentfiltern bzw. Zusammenstellungen von Filtersegmenten und die daraus zu bildenden Filterzigaretten verbessert wird.

Gelöst wird diese Aufgabe durch eine Einrichtung zur Messung von Eigenschaften von Multisegmentfiltern oder Zusammenstellungen von Filtersegmenten der Tabak verarbeitenden Industrie, wobei eine Beleuchtungsvorrichtung und ein Strahlungsempfänger vorgesehen sind, wobei mittels der Beleuchtungsvorrichtung eine im Wesentlichen längsaxial gleichmäßige Beleuchtung wenigstens eines Abschnitts eines Multisegmentfilters oder einer Zusammenstellung von Filtersegmenten in Form einer längsaxialen ersten Linie ermöglicht ist, wobei die Beleuchtungsvorrichtung eine erste Linie elektromagnetischer Strahlung auf den Multisegmentfiltern oder Zusammenstellungen von Filtersegmenten der Tabak verarbeitenden Industrie abbildet, deren Erstreckung quer zur Längsachse des Multisegmentfilters oder der Zusammenstellung von Filtersegmenten kleiner als der Durchmesser des Multisegmentfilters oder der Zusammenstellung von Filtersegmenten ist, wobei die Beleuchtungsvorrichtung einen Linienlaser umfasst.

Durch die erfindungsgemäße Einrichtung können sehr gezielt längsaxiale Bereiche der Multisegmentfilter bzw. der Zusammenstellung von Filtersegmenten beleuchtet werden, wobei es sich bei den Bereichen dann um diejenigen Bereiche handeln kann, die für einen hohen Kontrast für die jeweiligen Filtersegmente sorgen, so dass die Qualität der Messung verbessert wird. Durch die erfindungsgemäße Einrichtung kann insbesondere ein höherer Kontrast bei der Messung erzeugt werden, was zu genaueren Messergebnissen führt.

Abbilden einer ersten Linie heißt im Rahmen dieser Erfindung insbesondere auch daraufscheinen, beleuchten und ähnliches. Bei der elektromagnetischen Strahlung handelt es sich vorzugsweise um Licht. Längsaxial bedeutet im Rahmen der Erfindung entlang der Achse der Multisegmentfilter bzw. der Zusammenstellung von Filtersegmenten bzw. der jeweiligen Filtersegmente, wobei diese üblicherweise im Querschnitt kreisförmig oder elliptisch sein können. Längsaxial bedeutet dann im Wesentlichen senkrecht zum Querschnitt dieser Segmente bzw. der Filter. Längsaxial bedeutet insbesondere auch, dass die erste Linie auf der Oberfläche der Multisegmentfilter bzw. der Zusammenstellung von Filtersegmenten liegen kann. Unter Multisegmentfiltern oder Zusammenstellungen von Filtersegmenten werden insbesondere auch mit Umhüllungsmaterial versehene Multisegmentfilter oder Zusammenstellungen von Filtersegmenten verstanden. Es können auch die Eigenschaften von Multisegmentfiltern bzw. der Zusammenstellung von Filtersegmenten an einer Filterzigarette gemessen werden. Die erfindungsgemäße Einrichtung eignet sich also insbesondere auch zur Messung der Multisegmentfilter bzw. der Zusammenstellung von Filtersegmenten bei fertigen Filterzigaretten.

Wenn die Erstreckung der ersten Linie quer zur Längsachse des Multisegmentfilters oder der Zusammenstellung von Filtersegmenten kleiner als die Hälfte, insbesondere kleiner als ein Viertel, insbesondere kleiner als ein Achtel, des Durchmessers des Multisegmentfilters oder der Zusammenstellung von Filtersegmenten ist bzw. des Durchmessers eines Filtersegments, ist eine besonders genaue Messung möglich. Die Erstreckung der ersten Linie kann beispielsweise zwischen 0,5 mm und 2 mm sein. Vorzugsweise ist die Beleuchtungsvorrichtung ein Linienlaser.

Die Aufgabe wird ferner durch eine Einrichtung zur Messung von Eigenschaften von Multisegmentfiltern oder Zusammenstellungen von Filtersegmenten der Tabak verarbeitenden Industrie gelöst, wobei eine Beleuchtungsvorrichtung und ein Strahlungsempfänger vorgesehen sind, wobei mittels der Beleuchtungsvorrichtung eine im Wesentlichen längsaxial gleichmäßige Beleuchtung in Form einer ersten längsaxialen Linie wenigstens eines Abschnittes eines Multisegmentfilters oder einer Zusammenstellung von Filtersegmenten möglich ist, wobei der Strahlungsempfänger eine Optik umfasst, die eine zweite Linie längsaxial auf dem Multisegmentfilter oder der Zusammenstellung von Filtersegmenten abbildet, wobei die Beleuchtungsvorrichtung einen Linienlaser umfasst.

Die zweite Linie hat hierbei auch vorzugsweise eine Erstreckung, die quer zur Längsachse des Multisegmentfilters oder der Zusammenstellung von Filtersegmenten kleiner als der Durchmesser (D) des Multisegmentfilters oder der Zusammenstellung von Filtersegmenten ist. Die Erstreckung kann auch kleiner als die Hälfte, insbesondere kleiner als ein Viertel, insbesondere kleiner als ein Achtel, des Durchmessers (D) des Multisegmentfilters oder der Zusammenstellung von Filtersegmenten sein und vorzugsweise in einem Bereich von 0,5 mm bis 5 mm und vorzugsweise in einem Bereich von 0,5 mm bis 2 mm liegen. Durch die erfindungsgemäße Einrichtung ist es möglich, sehr gezielt entsprechende längsaxiale Bereiche der Multisegmentfilter bzw. der Zusammenstellungen von Filtersegmenten bzw. der Oberfläche der Multisegmentfilter bzw. der Zusammenstellungen von Filtersegmenten zu prüfen bzw. zu messen, ob die gewünschten Eigenschaften vorliegen.

Im Rahmen der Erfindung bedeutet abbilden einer zweiten Linie insbesondere ein Bild der Linie aufnehmen oder die Helligkeit der Linie erfassen bzw. die Farbe(n). Hierzu kann eine Optik eine zweite Linie auf einem Detektor, der für die elektromagnetische Strahlung empfindlich ist, abgebildet werden.

Wenn die zweite Linie zum Rand des Multisegmentfilters oder der Zusammenstellung von Filtersegmenten angeordnet ist, können sehr effizient besondere Fehler festgestellt werden, wie beispielsweise ein Verkippen von Filtersegmenten gegenüber anderen Filtersegmenten. Der Rand eines Multisegmentfilters bzw. einer Zusammenstellung von Filtersegmenten ist vorzugsweise bei Betrachtung des Multisegmentfilters bzw. der Zusammenstellung von deren Strahlungsempfänger am Rand des beobachteten Objekts angeordnet.

Vorzugsweise umfasst der Strahlungsempfänger eine Zeilenkamera, insbesondere CCD-Zeilen. Zeilenkameras bzw. CCD-Zeilen sind an sich bekannt. Es sei hierzu beispielsweise auf die DE 36 28 088 C2 verwiesen, in der entsprechend CCDs beschrieben sind. Eine Zeilenkamera umfasst vorzugsweise wenigstens ein CCD (charged coupled device bzw. ladungsgekoppelte Schaltung).

Wenn die zweite Linie räumlich entfernt von der ersten Linie ist, kann nicht nur reflektierte Strahlung gemessen werden, sondern transmittierte Strahlen bzw. Strahlung, also Strahlen, die von der beleuchteten Linie (erste Linie) zu der beobachteten Linie (zweite Linie) durch das Material der Filtersegmente hindurch tritt. Hierdurch können dann auch farblich bzw. von der Helligkeit her im Wesentlichen gleiche Filtersegmente, die allerdings aus unterschiedlichem Material sind, sehr gut unterschieden werden, da die Transmissionskoeffizienten von elektromagnetischer Strahlung bei verschiedenen Materialien unterschiedlich sind.

Wenn zwei erste Linien vorgesehen sind, wobei eine der zwei ersten Linien auf der zweiten Linie liegt, kann eine Mischung aus reflektierter und transmittierter Strahlung aufgenommen werden. Wenn zwei zweite Linien vorgesehen sind, wobei eine der zwei zweiten Linien auf der ersten Linie liegt, ist eine sehr genaue Messung der Eigenschaften der Multisegmentfilter oder der Zusammenstellung von Filtersegmenten möglich.

Die Aufgabe wird auch durch eine Maschine der Tabak verarbeitenden Industrie mit einer vorstehend beschriebenen erfindungsgemäßen Einrichtung gelöst.

Die Aufgabe wird ferner durch ein Verfahren zum Messen von Eigenschaften von Multisegmentfiltern oder Zusammenstellungen von Filtersegmenten der Tabak verarbeitenden Industrie mit den folgenden Verfahrensschritten gelöst:
- Beleuchten eines Multisegmentfilters oder der Zusammenstellung von Filtersegmenten mit einer ersten Linie elektromagnetischer Strahlung, die längsaxial zum Multisegmentfilter oder der Zusammenstellung von Filtersegmenten ist,
- Aufnehmen der von dem Multisegmentfilter oder der Zusammenstellung von Filtersegmenten reflektierten und/oder gestreuten elektromagnetischen Strahlung,
- Vergleichen der aufgenommenen Strahlung mit, insbesondere vorgebbaren, Sollwerten, wobei bei einer über einen vorgebbaren Toleranzbereich hinausgehenden Abweichung das Ergebnis der Messung ein fehlerhafter Multisegmentfilter oder eine fehlerhafte Zusammenstellung von Filtersegmenten ist, wobei das Beleuchten mittels eines Linienlasers geschieht und die Erstreckung der ersten Linie quer zur Längsachse des Multisegmentfilters oder der Zusammenstellung von Filtersegmenten kleiner als der Durchmesser des Multisegmentfilters oder der Zusammenstellung von Filtersegmenten ist.

Durch das erfindungsgemäße Verfahren ist eine sehr genaue Messung und damit eine sehr gute Qualitätskontrolle der Multisegmentfilter oder Zusammenstellung von Filtersegmenten möglich.

Wenn die Erstreckung der ersten Linie quer zur Längsachse des Multisegmentfilters oder der Zusammenstellung von Filtersegmenten kleiner als die Hälfte, insbesondere kleiner als ein Viertel, insbesondere kleiner als ein Achtel, des Durchmessers des Multisegmentfilters oder der Zusammenstellung von Filtersegmenten ist, ist die Genauigkeit der Messung erhöht.

Die Aufgabe wird ferner durch ein Verfahren zum Messen von Eigenschaften von Multisegmentfiltern oder Zusammenstellungen von Filtersegmenten der Tabak verarbeitenden Industrie mit den folgenden Verfahrensschritten gelöst:
- Beleuchten eines Multisegmentfilters oder der Zusammenstellung von Filtersegmenten mit einer ersten Linie elektromagnetischer Strahlung, die längsaxial zum Multisegmentfilter oder der Zusammenstellung von Filtersegmenten ist,
- Aufnehmen der von dem Multisegmentfilter oder der Zusammenstellung von Filtersegmenten reflektierten und/oder gestreuten elektromagnetischen Strahlung,
- Vergleichen der aufgenommenen Strahlung mit, insbesondere vorgebbaren, Sollwerten, wobei bei einer über einen vorgebbaren Toleranzbereich hinausgehenden Abweichung das Ergebnis der Messung ein fehlerhafter Multisegmentfilter oder eine fehlerhafte Zusammenstellung von Filtersegmenten ist, wobei zum Aufnehmen der elektromagnetischen Strahlung eine zweite Linie längsaxial auf dem Multisegmentfilter oder der Zusammenstellung von Filtersegmenten durch eine Aufnahmevorrichtung abgebildet wird, wobei die Beleuchtung mit der ersten Linie durch eine Beleuchtung mittels eines Linienlasers geschieht.

Vorzugsweise ist die zweite Linie kleiner als die Hälfte, insbesondere kleiner als ein Viertel, insbesondere kleiner als ein Achtel, des Durchmessers des Multisegmentfilters oder der Zusammenstellung von Filtersegmenten.

Wenn die zweite Linie zum Rand des Multisegmentfilters oder der Zusammenstellung von Filtersegmenten, insbesondere auf deren Oberfläche, angeordnet ist, können spezifische Fehler in der Zusammenstellung von Filtersegmenten bzw. Fehler beim Multisegmentfilter sehr genau erfasst werden, die bei einer Anordnung der zweiten Linie im Wesentlichen in der Mitte des Multisegmentfilters bzw. der Zusammenstellung von Filtersegmenten nicht oder nur schlecht erfasst werden könnten. Vorzugsweise ist die zweite Linie räumlich entfernt von der ersten Linie. Vorzugsweise liegt die zweite Linie auf der ersten Linie. Vorzugsweise sind zwei erste Linien vorgesehen, wobei eine der zwei ersten Linien auf der zweiten Linie liegt. Vorzugsweise sind zwei zweite Linien vorgesehen, wobei eine der zwei zweiten Linien auf der ersten Linie liegt.

Die Erfindung wird nachstehend ohne Beschränkung des allgemeinen Erfindungsgedankens anhand von Ausführungsbeispielen unter Bezugnahme auf die Zeichnungen beschrieben. Bezüglich aller im Text nicht näher erläuterten erfindungsgemäßen Einzelheiten wird ausdrücklich auf die Zeichnungen verwiesen. Es zeigen:
- Fig. 1a: eine schematische Filtersegmentanordnung mit vertauschten Filterbestandteilen,
- Fig. 1b: ein Diagramm eines Signals über eine Wegstrecke entlang der Filtersegmentzusammenstellung aus Fig. 1a,
- Fig. 2a: eine schematische Darstellung einer Filtersegmentzusammenstellung mit einem abgefallenen Filtersegment,
- Fig. 2b: ein Diagramm eines Signals über eine Wegstrecke entlang der Filtersegmentzusammenstellung aus Fig. 2a,
- Fig. 3a: eine schematische Darstellung einer Filtersegmentzusammenstellung mit einem Filtersegment in einer falschen Position,
- Fig. 3b: ein Diagramm eines Signals über eine Wegstrecke entlang der Filtersegmentzusammenstellung aus Fig. 3a,
- Fig. 4a: eine schematische Darstellung eines Teils eines Multisegmentfilters mit einer Lücke zwischen zwei Filtersegmenten,
- Fig. 4b: ein Diagramm eines Signals über eine Wegstrecke entlang des Multisegmentfilters aus Fig. 4a,
- Fig. 5a: eine schematische Darstellung einer Filtersegmentzusammenstellung mit einem verkippten Filtersegment,
- Fig. 5b: ein Diagramm eines Signals über eine Wegstrecke entlang der Filtersegmentzusammenstellung aus Fig. 5a entlang der Beobachtungslinie 16,
- Fig. 5c: ein Diagramm eines Signals über eine Wegstrecke entlang der Filtersegmentzusammenstellung aus Fig. 5a entlang der Beobachtungslinie 17,
- Fig. 6: eine schematische Darstellung einer erfindungsgemäßen Messung in Transmission,
- Fig. 7: eine schematische Darstellung einer erfindungsgemäßen Messeinrichtung,

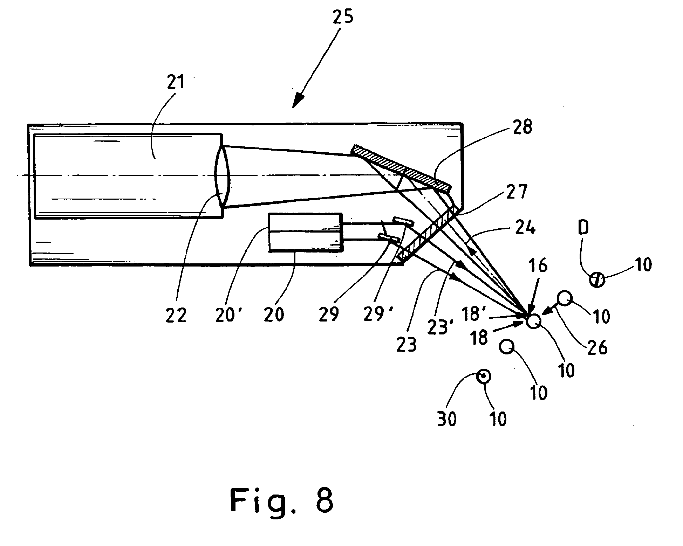

- Fig. 8: eine schematische Darstellung einer weiteren erfindungsgemäßen Messeinrichtung.

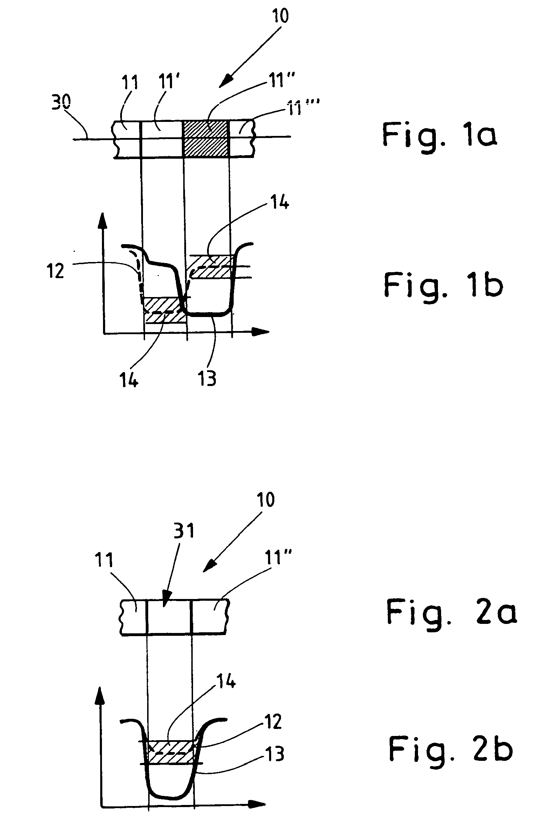

In der Zigarettenindustrie werden zunehmend neue Filtermaterialien eingesetzt. Ein besonderer Schwerpunkt ist der Einsatz so genannter Multisegmentfilter. Hierbei handelt es sich um Filter, die aus unterschiedlichen Filtermaterialien zusammengesetzt sind. Bei der Herstellung dieser Filter kann es zu Fertigungsfehlern kommen. Die entsprechend fehlerhaften Produkte sollen im Verarbeitungsprozess nicht weiter verarbeitet werden. Es sind insbesondere einige Fehler im Folgenden zu nennen, und zwar unter Bezugnahme auf die Figuren 1 bis 5.

Fig. 1. zeigt in schematischer Darstellung eine Filtersegmentzusammenstellung 10 umfassend Filtersegmente 11, 11', 11" und 11''', die unterschiedlich sein können oder wenigstens teilweise auch gleich sein können. Es ist ferner in Fig. 1 a noch eine Längsachse 30 schematisch angedeutet. In der Filtersegmentzusammenstellung 10 gemäß Fig. 1 a ist nun der Fehler aufgetreten, dass die Filtersegmente 11' und 11" vertauscht sind. Bei beispielsweise einer Reflexionsmessung dieser Filtersegmente 11' und 11", wobei das Filtersegment 11' stärker reflektiert als das Filtersegment 11", würde bei richtiger Anordnung der Filterbestandteile 11' und 11" als Messkurve 13 sich eine derartige sich ergeben, die im Wesentlichen übereinstimmt mit der Sollkurve 12, die in Fig. 1b dargestellt ist. Bei der Fig. 1b handelt es sich um ein schematisches Diagramm, bei der auf der Koordinate eine Signalstärke aufgetragen ist und auf der Abszisse der Weg entlang der Filtersegmentzusammenstellung 10. Entsprechendes gilt für die Figuren 2b, 3b, 4b, 5b und 5c.

Die Schnittstellen zwischen den Filtersegmenten 11 bis 11" sind entsprechend durch angedeutete Linien von der Fig. 1a zur Fig. 1b heruntergezeichnet, um ein Erkennen der Zusammenhänge mit den entsprechenden Kurven 12 und 13 zu vereinfachen. Außerdem ist in Fig. 1b noch jeweils ein Toleranzbereich 14 dargestellt, in dessen Rahmen eine Abweichung bei der Messung der Filtersegmentzusammenstellung 10 toleriert werden würde. In diesem Fall ist eindeutig zu erkennen, dass die Messkurve 13 so weit von der Sollkurve 12 beabstandet ist, dass diese deutlich aus dem Toleranzbereich 14 heraustritt, so dass das Ergebnis der Messung eine fehlerhafte Filtersegmentzusammenstellung 10 ist.

In Fig. 2a ist eine schematische Darstellung einer Filtersegmentzusammenstellung 10 dargestellt, bei der ein fehlendes Filtersegment 31 vorliegt. Es ist in diesem Fall angenommen worden, dass ein Filtersegment an der Stelle des fehlenden Filtersegments 31 angeordnet sein sollte, das etwas weniger reflektiert als die Filtersegmente 11 und 11", die beispielsweise aus gleichem Material sein können. Aus diesem Grund ist die gestrichelt dargestellte Sollkurve in Fig. 2b von dem Intensitätsverlauf her im Bereich dieses an sich vorhanden sein sollenden Filtersegments etwas abgesenkt. Es ist auch ein Toleranzbereich 14 wieder mit Strichausfüllung dargestellt. Die Messkurve 13 weicht wieder deutlich von der Sollkurve 12 dergestalt ab, dass diese aus dem Toleranzbereich 14 heraustritt, so dass das Ergebnis dieser Messung auch eine fehlerhafte Filtersegmentzusammenstellung 10 ist.

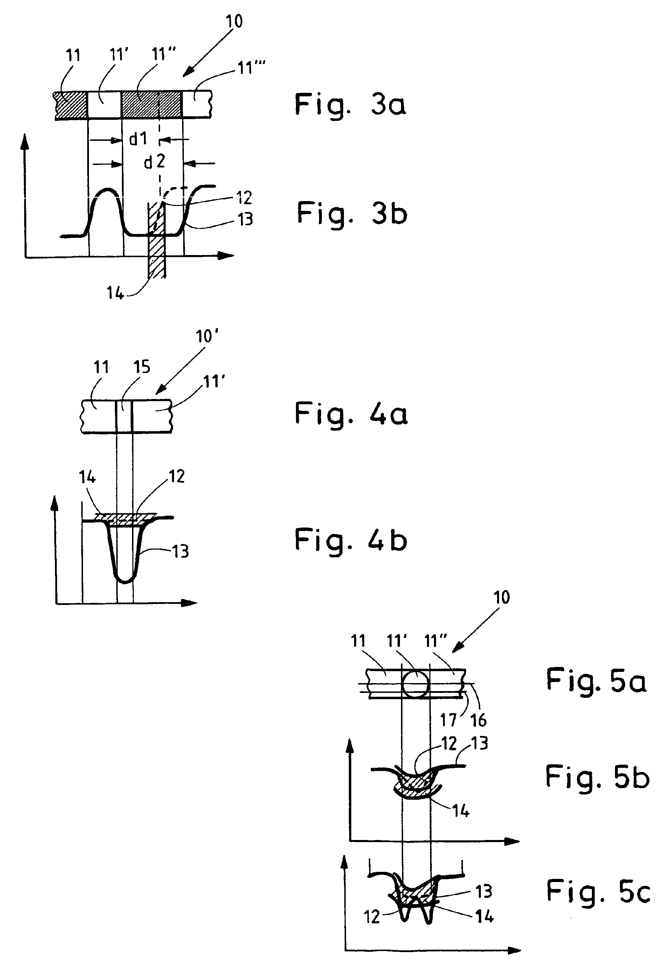

In Fig. 3a ist ein anderer Fehler angedeutet. Hierbei handelt es sich um ein Filtersegment 11" mit einer zu großen Ist-Länge d2. Die Solllänge d1 ist deutlich kleiner als die Ist-Länge. Aus diesem Grund geht die Intensität der gemessenen Strahlung der Sollkurve 12 in Fig. 3b früher hoch im Vergleich zur Messkurve 13. Aus diesem Grund kann in diesem Fall der Toleranzbereich 14 als ein Toleranzbereich der Strecke bzw. des Weges angesehen werden. Auf diese Art und Weise könnte auch eine falsche Position eines Filtersegments eben durch eine entsprechende Flanke an einer bestimmten vorgesehenen Stelle erkannt werden bzw. ob diese Flanke an der Sollstelle liegt oder an einer anderen Stelle.

Fig. 4a zeigt einen Teil eines Multisegmentfilters 10' in schematischer Darstellung, in dem zwei Filtersegmente 11 und 11' nicht wie gewünscht aneinander liegen, sondern eine zu große Lücke 15 zwischen sich aufweisen. Die dazugehörende Sollkurve 12 weist an dieser Nahtstelle bei Materialien der Filtersegmente 11 und 11' beispielsweise mit gleicher Reflexion oder gleicher Transmission eine im Wesentlichen gerade Linie auf, die auch, wie in dieser Anmeldung für Sollkurven 12 üblich, gestrichelt dargestellt ist. Die Messkurve 13 weicht hiervon deutlich ab, so dass das Ergebnis der Messung ein fehlerhafter Multisegmentfilter 10' ist.

Fig. 4b zeigt wieder eine Filtersegmentzusammenstellung 10 in schematischer Darstellung, bei der das Filtersegment 11' um 90° im Hinblick auf die Längsachse 30 verkippt ist. Die Längsachse des verkippten Filtersegments 11' ist um 90° gegenüber den Längsachsen der Filtersegmente 11 und 11 "bzw. der Längsachse der Filtersegmentzusammenstellung 10 gekippt. Es sind in Fig. 5a schematisch zwei Beobachtungslinien 16 und 17 angedeutet, die voneinander beabstandet sind. Die Beobachtungslinie 16 misst aus Beobachtungsrichtung ungefähr in der Mitte der dem Betrachter entgegentretenden Fläche der Multisegmentfilterzusammenstellung 10 und die Beobachtungslinie 17 am Rand hierzu. Die Messkurve bzw. die Sollkurve zu der Messung entlang der Beobachtungslinie 16 ist sich in Fig. 5b und die der Beobachtungslinie 17 in Fig. 5c dargestellt. Es ist deutlich zu erkennen, dass bei einer Messung entlang der Beobachtungslinie 16 der Fehler gar nicht erkannt worden wäre, da die Messkurve im Toleranzbereich 14 liegt. Hingegen ist in Fig. 5c zu erkennen, dass die Messkurve 13 außerhalb vom Toleranzbereich 14 liegt. Die Messung am Rand hat also bei einem derartigen Fehler einen ganz immanenten Vorteil und erhöht die Güte der Qualitätskontrolle entsprechender Filtersegmentzusammenstellungen bzw. Multisegmentfilter.

Der Lösungsgedanke, der dieser Patentanmeldung zugrunde liegt, ist, dass eine Linie auf den Filterbestandteilen bzw. auf einem Multisegmentfilter 10' oder in einer Filtersegmentzusammenstellung 10 mit Hilfe einer abbildenden Optik auf der lichtempfindlichen Schicht eines Zeilenarrays einer Zeilenkamera abgebildet wird. Hell-Dunkel-Unterschiede oder farbige Unterschiede werden entsprechend zu Hell-Dunkel-Intensitäten bzw. Farbintensitäten auf der Zeile der Zeilenarrays führen. In einer sehr einfachen Ausführung, die keine Ausführungsbeispiel gemäß der Erfindung darstellt, beispielsweise bei einer Reflexionsmessung, wird die Oberfläche der Filterbestandteile mit einer normalen Lampe oder einem Diodenarray beleuchtet und die Messung in Reflexion durchgeführt, wobei die Messvorrichtung 25 eine Optik aufweist, die eben das Beobachten so einer Linie, die eine Erstreckung quer zur Längsachse des zu messenden Objektes hat, die kleiner als der Durchmesser des zu messenden Objektes ist ermöglicht.

Auf diese Weise kann beispielsweise die Vertauschung von Filterbestandteilen dadurch erkannt werden, dass der tatsächliche Intensitätsverlauf auf der Zeile des Kamerachips anders als erwartet verläuft. Vergleiche hierzu Fig. 1b. Sollten Fehlerbestandteile fehlen, weicht das Intensitätssignal im relevanten Bereich deutlich vom erwarteten Verlauf ab. Vergleiche Fig. 2b. Befinden sich Filterbestandteile in der falschen Position oder weichen sie in ihrer Länge vom erwarteten Wert ab, treten die Intensitätsübergänge nicht an den erwarteten Stellen auf. Vergleiche hierzu Fig. 3b. Wenn Lücken auftreten, kommt es zu Intensitätseinbrüchen im Signalverlauf. Vergleiche hierzu Fig. 4b. Bei gekippten Filterbestandteilen kommt es zu charakteristischen Veränderungen des Signalverlaufs, die besonders deutlich ausfallen, wenn nicht nur in der Mitte der Filterbestandteile sondern auch am Rand der Filterbestandteile gemessen wird. Vergleiche hierzu die Figuren 5a bis 5c.

Da zunehmend Filterbestandteile zum Einsatz kommen, deren Oberfläche im Wesentlichen weiß ist, sind häufig die tatsächlichen Kontraste deutlich geringer als in den Figuren angedeutet wurde. Zur Signalanhebung und insbesondere zur Lückenerkennung sowie der Erkennung von weiß-weißen Übergangsstellen werden Filtertechniken angewendet, beispielsweise die Technik der FIR-Filter (FIR von Finite Impulse Response) also insbesondere digitale Filter mit begrenztem Impulsansprechverhalten und mit diskreten Zeitschritten. Es können auch andere Filter oder Rauschverringerungsvorrichtungen Verwendung finden.

Die Beleuchtung findet beispielsweise mit einer Laserlichtlinie 18 bzw. Laserstrahllinie 18 statt, die auf die Oberfläche der Filterbestandteile bzw. auf die Oberfläche der Multisegmentfilter strahlt.

Hierfür kommt beispielsweise ein Laser-Mikroliniengenerator 13 LRM oder 55CM der Firma Schäfter & Kirchhoff in Frage. Der Vorteil dieser Beleuchtungsart besteht darin, dass das Licht in Umfangsrichtung der Filterbestandteile sehr konzentriert aufgebracht werden kann. Hierdurch ist es möglich, Kontraste zu erkennen, die mit einer flächigeren Beleuchtung nicht mehr erkennbar wären. Dies ist besonders dann vorteilhaft, wenn dicht beieinander zwei Scans bzw. Beobachtungslinien vorgesehen sind, wie beispielsweise in Fig. 5a angedeutet ist.

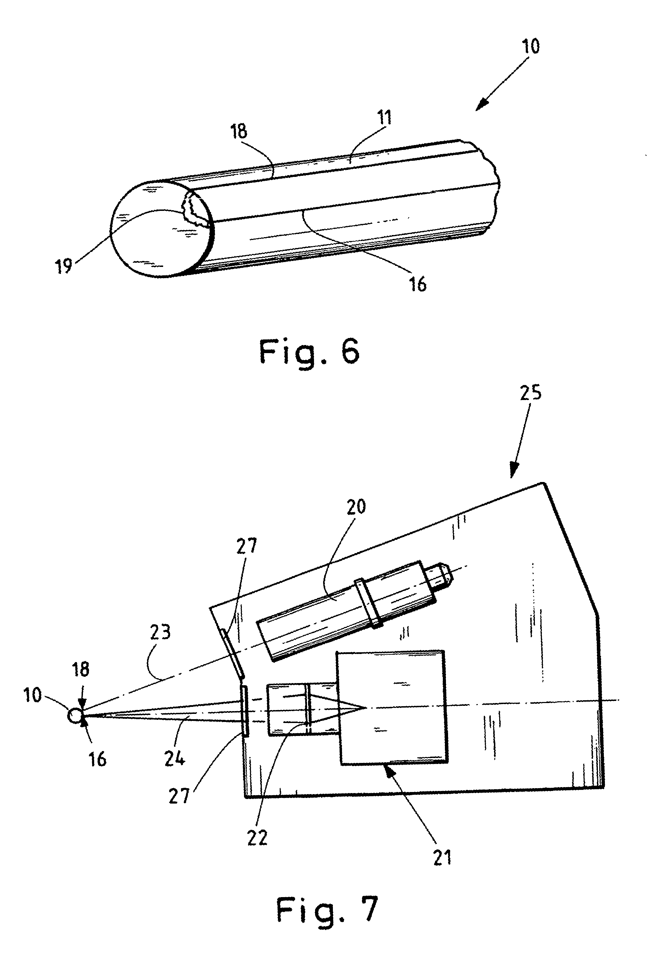

Die Beleuchtung mit einer Laserstrahllinie 18 ist auch dann von Vorteil, wenn, wie in Fig. 6 schematisch angedeutet ist, eine Beobachtungslinie 16 Verwendung findet, die beabstandet von der Laserstrahllinie 18 ist. Dieses kann dann dazu dienen, bei extrem ähnlicher Weißfärbung der Oberfläche und zwei unterschiedlichen Filterbestandteilen bzw. Filtersegmenten 11 bis 11"' den Übergang zwischen den beiden Filtersegmenten noch einwandfrei zu erkennen.

Zu einer Kontrastverbesserung kann es dann kommen, wenn nicht mehr in direkter Reflexion sondern, wie in Fig. 6 andeutet ist, in Transmission gemessen wird. Hierzu wird, wie in Fig. 6 schematisch angedeutet ist, eben das Transmissionslicht 19 einer Beobachtungslinie gemessen, das durch die Laserstrahllinie 18 hervorgerufen wird. Hierzu sind die Laserstrahllinie 18 und die Beobachtungslinie 16 nicht mehr auf eine gleiche Linie fokussiert, sondern auf zwei im Wesentlichen bzw. vollständig parallel nah beieinander verlaufenden Linien, die insbesondere sich nicht überschneiden. Das von der Kamera aufgezeichnete Licht hat dabei das Filtermaterial durchdrungen. Da an den Fügestellen der Lichtweg immer ein anderer ist als im vollen Material, kommt es in den Übergangsgebieten zu einer Kontrastverstärkung.

Es kann eine ganz einfache Anordnung einer entsprechenden Einrichtung zur Messung von Eigenschaften von Multisegmentfiltern oder Zusammenstellungen von Filtersegmenten der Tabak verarbeitenden Industrie so vorgesehen sein, dass ein im Wesentlichen gerader Strahlengang vorgenommen wird. Hierbei ist der Strahlenverlauf von Lichtquellen und Kamera in ihren optischen Achsen im Wesentlichen geradlinig.

Es wird auch eine Laserlichtquelle von Schäfter & Kirchhoff vorzugsweise verwendet und eine Zeilenkamera der Firma Dalsa. Die Winkel zwischen der Laserlichtquelle können so gewählt werden, dass entweder in Reflexion und/oder in Transmission gemessen werden kann.

Fig. 7 zeigt eine erfindungsgemäße Messvorrichtung 25, die deutlich Platz sparender als eine Messanordnung mit geradem Strahlengang ist. Eine Laserlichtquelle strahlt einen Laserstrahl 23, der eine relativ große Erstreckung aus dem Zeichnungsblatt heraus hat, also einen Linienstrahl bzw. eine Laserstrahllinie 18 auf dem Multisegmentfilter 10' erzeugt, ab. Etwas beabstandet hierzu ist eine Beobachtungslinie 16 vorgesehen, die durch Abbildung der Linie 16 mittels einer Linse 22 auf eine Zeilenkamera 21 bzw. die photoempfindlichen Elemente, wie beispielsweise eine nicht dargestellte CCD-Zeile der Zeilenkamera 21 abbildet. Es sind außerdem entsprechende Fenster in der Messvorrichtung 25 vorgesehen, damit die elektromagnetischen Strahlen, vorzugsweise Lichtstrahlen, auch durch die Vorrichtung treten können.

In einer weiteren erfindungsgemäßen Ausgestaltung bzw. Messeinrichtung werden zwei Lichtquellen, nämlich auch in diesem Fall Laserlichtquellen 20, 20', die Laserstrahllinien 18 und 18' auf Filtersegmentzusammenstellungen 10 abbilden bzw. beleuchten, die voneinander beabstandet sind. Hierzu werden die Laserstrahlen 23 und 23' mit Spiegel 29 und 29' abgelenkt.

Die Filtersegmentzusammenstellungen 10 bewegen sich entlang der Bewegungsrichtung 26 beispielsweise auf einer Trommel, die nicht dargestellt ist Es ist außerdem die Längsachse 30 einer Filtersegmentzusammenstellung 10 dargestellt und der Durchmesser D.

Die Messvorrichtung 25 umfasst außerdem eine Zeilenkamera 21, die das durch die Optik 22 und den Spiegel 28 abgebildete Licht der Beobachtungslinie 16 aufnimmt. Das aufgenommene Licht 24 wird entsprechend durch die Linse 22 gebündelt. Auf dem lichtempfindlichen Element, beispielsweise eine CCD-Zeile, die nicht dargestellt ist, der Zeilenkamera 21, wird sowohl von dem Laserstrahl 23 in der Laserstrahllinie 18' reflektiertes Licht zu der Zeilenkamera 21 geführt als auch von dem Laserstrahl 23 auf die Laserstrahllinie 18 zur Beobachtungslinie 16 durch die Filtersegmentzusammenstellung 10 transmittiertes Licht in der Zeilenkamera 21 abgebildet.

Es könnte nun zusätzlich auch noch vorgesehen sein, eine weitere Zeilenkamera 21 zu verwenden, um auch noch eine nicht dargestellte Beobachtungslinie 17 in der weiteren nicht dargestellten Zeilenkamera abzubilden, wobei die Beobachtungslinie 17 beabstandet von der Beobachtungslinie 16 ist und auch beabstandet von der Laserstrahllinie 18 angeordnet sein kann, um den Kontrast für die Transmissionsmessung zu verbessern. Die weitere Beobachtungslinie 17 könnte auch mit der Laserstrahllinie 18 übereinstimmen. Es kann auch vorgesehen sein, die beiden Lichtquellen alternierend einzuschalten bzw. alternierend die Laserstrahlen 23 und 23' auszublenden, um auf diese Weise eine gegenseitige Beeinflussung der Reflexionsmessung und der Transmissionsmessung zu verhindern. Dieses kann in einem Takt geschehen, in dem eine einzige Filtersegmentzusammenstellung 10 sich in entsprechenden Messpositionen befindet.

Vorzugsweise geschieht die Aufnahme der Messwerte mit Contact-Image-Sensoren.

### Bezugszeichenliste

- 10: Filtersegmentzusammenstellung
- 10': Multisegmentfilter
- 11, 11', 11", 11''': Filtersegment
- 12: Sollkurve
- 13: Messkurve
- 14: Toleranzbereich
- 15: Lücke
- 16: Beobachtungslinie
- 17: Beobachtungslinie
- 18, 18': Laserstrahllinie
- 19: Transmissionslicht
- 20, 20': Laserlichtquelle
- 21: Zeilenkamera
- 22: Linse
- 23, 23': Laserstrahl
- 24: aufgenommenes Licht
- 25: Messvorrichtung
- 26: Bewegungsrichtung
- 27: Fenster
- 28: Spiegel
- 29, 29': Spiegel
- 30: Längsachse
- 31: fehlendes Filtersegment
- d1: Solllänge
- d2: Istlänge
- D: Durchmesser

## Patentansprüche

1. Einrichtung zur Messung von Eigenschaften von Multisegmentfiltern (10') oder Zusammenstellungen (10) von Filtersegmenten (11-11"') der Tabak verarbeitenden Industrie, wobei eine Beleuchtungsvorrichtung (20, 20') und ein Strahlungsempfänger 21 vorgesehen sind, wobei mittels der Beleuchtungsvorrichtung (20, 20') eine im Wesentlichen längsaxial gleichmäßige Beleuchtung wenigstens eines Abschnitts eines Multisegmentfilters (10') oder einer Zusammenstellung (10) von Filtersegmenten (11-11 "') in Form einer ersten längsaxialen Linie ermöglicht ist, **dadurch gekennzeichnet, dass** die Beleuchtungsvorrichtung (20, 20') die erste Linie (18, 18') elektromagnetischer Strahlung auf den Multisegmentfilter (10') oder die Zusammenstellung (10) von Filtersegmenten (11-11'") so abbildet, dass deren Erstreckung quer zur Längsachse (30) des Multisegmentfilters (10') oder der Zusammenstellung (10) von Filtersegmenten (11-11"') kleiner als der Durchmesser (D) des Multisegmentfilters (10') oder der Zusammenstellung (10) von Filtersegmenten (11-11"') ist, wobei die Beleuchtungsvorrichtung (20, 20') einen Linienlaser umfasst.

2. Einrichtung nach Anspruch 1, **dadurch gekennzeichnet, dass** die Erstreckung der ersten Linie (18, 18') quer zur Längsachse (30) des Multisegmentfilters (10') oder der Zusammenstellung (10) von Filtersegmenten (11-11"') kleiner als die Hälfte, insbesondere kleiner als ein Viertel, insbesondere kleiner als ein Achtel, des Durchmessers (D) des Multisegmentfilters (10') oder der Zusammenstellung (10) von Filtersegmenten (11-11"') ist.

3. Einrichtung nach Anspruch 1 oder 2 oder dem Oberbegriff von Anspruch 1, **dadurch gekennzeichnet, dass** der Strahlungsempfänger (21) eine Optik (22, 28) umfasst, die eine zweite Linie (16, 17) längsaxial auf dem Multisegmentfilter (10') oder der Zusammenstellung (10) von Filtersegmenten (11-11 "') abbildet, und wobei die Beleuchtungsvorrichtung (20, 20') einen Linienlaser umfasst.

4. Einrichtung nach Anspruch 3, **dadurch gekennzeichnet, dass** die zweite Linie (16, 17) zum Rand des Multisegmentfilters (10') oder der Zusammenstellung (10) von Filtersegmenten (11-11"') angeordnet ist.

5. Einrichtung nach einem der Ansprüche 1 bis 4, **dadurch gekennzeichnet, dass** der Strahlungsempfänger (21) eine Zeilenkamera, insbesondere eine CCD-Zeile umfasst.

6. Einrichtung nach Anspruch 5, **dadurch gekennzeichnet, dass** die zweite Linie (16, 17) räumlich entfernt von der ersten Linie (18, 18') ist.

7. Einrichtung nach Anspruch 6, **dadurch gekennzeichnet, dass** zwei erste Linien (18, 18') vorgesehen sind, wobei eine der zwei ersten Linien (18, 18') auf der zweiten Linie (16, 17) liegt.

8. Einrichtung nach Anspruch 6, **dadurch gekennzeichnet, dass** zwei zweite Linien (16, 17) vorgesehen sind, wobei eine der zwei zweiten Linien (16, 17') auf der ersten Linie (18, 18') liegt.

9. Verfahren zum Messen von Eigenschaften von Multisegmentfiltern (10') oder Zusammenstellungen (10) von Filtersegmenten (11-11'") der Tabak verarbeitenden Industrie mit den folgenden Verfahrensschritten:
- Beleuchten eines Multisegmentfilters (10') oder der Zusammenstellung (10) von Filtersegmenten (11-11 "') mit einer ersten Linie (18, 18') elektromagnetischer Strahlung, die längsaxial zum Multisegmentfilter (10') oder der Zusammenstellung (10) von Filtersegmenten (11, 11"') ist,
- Aufnehmen der von dem Multisegmentfilter (10') oder der Zusammenstellung (10) von Filtersegmenten (11-11"') reflektierten und/oder gestreuten elektromagnetischen Strahlung (24),
- Vergleichen der aufgenommenen Strahlung (24) mit, insbesondere vorgebbaren, Sollwerten (12), wobei bei einer über einen vorgebbaren Toleranzbereich (14) hinausgehenden Abweichung das Ergebnis der Messung ein fehlerhafter Multisegmentfilter (10') oder eine fehlerhafte Zusammenstellung (10) von Filtersegmenten (11-11"') ist,
**dadurch gekennzeichnet, dass** das Beleuchten mittels eines Linienlasers (20, 20') geschieht und die Erstreckung der ersten Linie (18, 18') quer zur Längsachse (30) des Multisegmentfilters oder der Zusammenstellung (10) von Filtersegmenten (11-11"') kleiner als der Durchmesser (D) des Multisegmentfilters (10') oder der Zusammenstellung (10) von Filtersegmenten (11-11"') ist.

10. Verfahren nach Anspruch 9, **dadurch gekennzeichnet, dass** die Erstreckung der ersten Linie (18, 18') quer zur Längsachse (30) des Multisegmentfilters (10') oder der Zusammenstellung (10) von Filtersegmenten (11-11'") kleiner als die Hälfte, insbesondere kleiner als ein Viertel, insbesondere kleiner als ein Achtel, des Durchmessers (D) des Multisegmentfilters (10') oder der Zusammenstellung (10) von Filtersegmenten (11-11"') ist.

11. Verfahren nach Anspruch 9 oder 10 oder dem Oberbegriff von Anspruch 9, **dadurch gekennzeichnet, dass** zum Aufnehmen der elektromagnetischen Strahlung eine zweite Linie (16, 17) längsaxial auf dem Multisegmentfilter (10') oder der Zusammenstellung (10) von Filtersegmenten (11-11'") durch eine Aufnahmevorrichtung (21, 22, 28) abgebildet wird, wobei die Beleuchtung mit der ersten Linie (18, 18') durch eine Beleuchtung mittels eines Linienlasers (20, 20') geschieht.

12. Verfahren nach Anspruch 11, **dadurch gekennzeichnet, dass** die zweite Linie (16, 17) zum Rand des Multisegmentfilters (10') oder der Zusammenstellung (10) von Filtersegmenten (11-11'") angeordnet ist.

13. Verfahren nach Anspruch 11 oder 12, **dadurch gekennzeichnet, dass** die zweite Linie (16, 17) räumlich entfernt von der ersten Linie (18, 18') ist.

14. Verfahren nach Anspruch 11 oder 12, **dadurch gekennzeichnet, dass** die zweite Linie (16, 17) auf der ersten Linie (18, 18') liegt.

15. Verfahren nach Anspruch 11 oder 12, **dadurch gekennzeichnet, dass** zwei erste Linien (18, 18') vorgesehen sind, wobei eine der zwei ersten Linien (18, 18') auf der zweiten Linie (16, 17) liegt.

16. Verfahren nach Anspruch 11 oder 12, **dadurch gekennzeichnet, dass** zwei zweite Linien (16, 17) vorgesehen sind, wobei eine der zwei zweiten Linien (16, 17) auf der ersten Linie (18, 18') liegt.

17. Maschine der Tabak verarbeitenden Industrie mit einer Einrichtung nach einem der Ansprüche 1 bis 8.

## Claims

1. Device for measuring properties of multi-segment filters (10') or combinations (10) of filter segments (11-11''') of the tobacco-processing industry, an illumination device (20, 20') and a radiation receiver (21) being provided, the illumination device (20, 20') enabling a substantially longitudinally axially uniform illumination of at least one section of a multi-segment filter (10') or a combination (10) of filter segments (11-11"') in the form of a first longitudinally axial line, **characterised in that** the illumination device (20, 20') images the first line (18, 18') of electromagnetic radiation on the multi-segment filter (10') or the combination (10) of filter segments (11-11"') in such a way that the extension of the first line (18, 18') transversely with respect to the longitudinal axis (30) of the multi-segment filter (10') or the combination (10) of filter segments (11-11"') is less than the diameter (D) of the multi-segment filter (10') or the combination (10) of filter segments (11-11'''), the illumination device (20, 20') comprising a linear laser.

2. Device according to Claim 1, **characterised in that** the extension of the first line (18, 18') transversely with respect to the longitudinal axis (30) of the multi-segment filter (10') or the combination (10) of filter segments (11-11''') is less than half, in particular less than a quarter, in particular less than an eighth, of the diameter (D) of the multi-segment filter (10') or the combination (10) of filter segments (11-11"').

3. Device according to Claim 1 or 2 or the precharacterising clause of Claim 1, **characterised in that** the radiation receiver (21) comprises an optical system (22, 28) which images a second line (16, 17) in a longitudinally axial manner on the multi-segment filter (10') or the combination (10) of filter segments (11-11"'), and the illumination device (20, 20') comprising a linear laser.

4. Device according to Claim 3, **characterised in that** the second line (16, 17) is arranged at the edge of the multi-segment filter (10') or the combination (10) of filter segments (11-11"').

5. Device according to one of Claims 1 to 4, **characterised in that** the radiation receiver (21) comprises a linear camera, in particular a CCD line.

6. Device according to Claim 5, **characterised in that** the second line (16, 17) is spatially apart from the first line (18, 18').

7. Device according to Claim 6, **characterised in that** two first lines (18, 18') are provided, one of the two first lines (18, 18') lying on the second line (16, 17).

8. Device according to Claim 6, **characterised in that** two second lines (16, 17) are provided, one of the two second lines (16, 17) lying on the first line (18, 18').

9. Method for measuring properties of multi-segment filters (10') or combinations (10) of filter segments (11-11''') of the tobacco-processing industry, having the following method steps:
- illuminating a multi-segment filter (10') or the combination (10) of filter segments (11-11''') with a first line (18, 18') of electromagnetic radiation which is longitudinally axial with respect to the multi-segment filter (10') or the combination (10) of filter segments (11-11'''),
- recording the electromagnetic radiation reflected and/or scattered by the multi-segment filter (10') or the combination (10) of filter segments (11-11'''),
- comparing the recorded radiation (24) with, in particular predeterminable, desired values (12), and in the event of a deviation exceeding a predeterminable tolerance range (14), the result of the measurement is a defective multi-segment filter (10') or a defective combination (10) of filter segments (11-11'''),
**characterised in that** the illuminating is effected by means of a linear laser (20, 20') and the extension of the first line (18, 18') transversely with respect to the longitudinal axis (30) of the multi-segment filter or the combination (10) of filter segments (11-11''') is less than the diameter (D) of the multi-segment filter (10') or the combination (10) of filter segments (11-11''').

10. Method according to Claim 9, **characterised in that** the extension of the first line (18, 18') transversely with respect to the longitudinal axis (30) of the multi-segment filter (10') or the combination (10) of filter segments (11-11''') is less than half, in particular less than a quarter, in particular less than an eighth, of the diameter (D) of the multi-segment filter (10') or the combination (10) of filter segments (11-11''').

11. Method according to Claim 9 or 10 or the precharacterising clause of Claim 9, **characterised in that** for the recording of the electromagnetic radiation a second line (16, 17) is imaged in a longitudinally axial manner on the multi-segment filter (10') or the combination (10) of filter segments (11-11''') by a recording device (21, 22, 28), the illumination with the first line (18, 18') being effected by an illumination by means of a linear laser (20, 20').

12. Method according to Claim 11, **characterised in that** the second line (16, 17) is arranged at the edge of the multi-segment filter (10') or the combination (10) of filter segments (11-11''').

13. Method according to Claim 11 or 12, **characterised in that** the second line (16, 17) is spatially apart from the first line (18, 18').

14. Method according to Claim 11 or 12, **characterised in that** the second line (16, 17) lies on the first line (18, 18').

15. Method according to Claim 11 or 12, **characterised in that** two first lines (18, 18') are provided, one of the two first lines (18, 18') lying on the second line (16, 17).

16. Method according to Claim 11 or 12, **characterised in that** two second lines (16, 17) are provided, one of the two second lines (16, 17) lying on the first line (18, 18').

17. Machine of the tobacco-processing industry with a device according to one of Claims 1 to 8.

## Revendications

1. Dispositif pour mesurer des propriétés de filtres multisegments (10') ou d'assemblages (10) de segments de filtre (11-11 "') de l'industrie de transformation du tabac, dans lequel sont prévus un dispositif d'éclairage (20, 20') et un récepteur de rayonnement (21), le dispositif d'éclairage (20, 20') permettant un éclairage sensiblement uniforme dans une direction de l'axe longitudinal d'au moins une partie d'un filtre multisegment (10') ou d'un assemblage (10) de segments de filtre (11-11 "') sous la forme d'une première ligne axiale longitudinale, **caractérisé en ce que** le dispositif d'éclairage (20, 20') projette la première ligne (18, 18') de rayonnement électromagnétique sur le filtre multisegment (10') ou l'assemblage (10) de segments de filtre (11-11"') de façon telle que son étendue dans une direction transversale à l'axe longitudinal (30) du filtre multisegment (10') ou de l'assemblage (10) de segments de filtre (11-11"') est plus petite que le diamètre (D) du filtre multisegment (10') ou de l'assemblage (10) de segments de filtre (11-11"'), le dispositif d'éclairage (20, 20') comprenant un laser linéaire.

2. Dispositif selon la revendication 1, **caractérisé en ce que** l'étendue de la première ligne (18, 18') transversalement à l'axe longitudinal (30) du filtre multisegment (10') ou de l'assemblage (10) de segments de filtre (11-11"') est plus petite que la moitié, en particulier plus petite qu'un quart, en particulier plus petite qu'un huitième, du diamètre (D) du filtre multisegment (10') ou de l'assemblage (10) de segments de filtre (11-11"').

3. Dispositif selon la revendication 1 ou 2 ou le préambule de la revendication 1, **caractérisé en ce que** le récepteur de rayonnement (21) comprend un système optique (22, 28) qui projette une deuxième ligne (16, 17) dans une direction de l'axe longitudinal sur le filtre multisegment (10') ou l'assemblage (10) de segments de filtre (11-11'"), le dispositif d'éclairage (20, 20') comprenant un laser linéaire.

4. Dispositif selon la revendication 3, **caractérisé en ce que** la deuxième ligne (16, 17) est disposée au niveau du bord du filtre multisegment (10') ou de l'assemblage (10) de segments de filtre (11-11"').

5. Dispositif selon l'une des revendications 1 à 4, **caractérisé en ce que** le récepteur de rayonnement (21) comprend une caméra linéaire, en particulier une barrette CCD.

6. Dispositif selon la revendication 5, **caractérisé en ce que** la deuxième ligne (16, 17) est éloignée spatialement de la première ligne (18, 18').

7. Dispositif selon la revendication 6, **caractérisé en ce que** deux premières lignes (18, 18') sont prévues, l'une des deux premières lignes (18, 18') étant située sur la deuxième ligne (16, 17).

8. Dispositif selon la revendication 6, **caractérisé en ce que** deux deuxièmes lignes (16, 17) sont prévues, l'une des deux deuxièmes lignes (16, 17') étant située sur la première ligne (18, 18').

9. Procédé pour mesurer des propriétés de filtres multisegments (10') ou d'assemblages (10) de segments de filtre (11-11"') de l'industrie de transformation du tabac, comprenant les étapes de procédé suivantes :
- éclairage d'un filtre multisegment (10') ou d'un assemblage (10) de segments de filtre (11-11"') par une première ligne (18, 18') de rayonnement électromagnétique, qui est dans l'axe longitudinal par rapport au filtre multisegment (10') ou à l'assemblage de segments de filtre (11-11"'),
- réception du rayonnement électromagnétique (24) réfléchi et/ou diffusé par le filtre multisegment (10') ou l'assemblage de segments de filtre (11-11"'),
- comparaison du rayonnement (24) reçu avec des valeurs de consigne (12), en particulier prédéterminables, le résultat de la mesure, en cas d'écart dépassant une plage de tolérance (14) prédéterminable, étant un filtre multisegment (10') défectueux ou un assemblage (10) d'éléments de filtre (11-11"') défectueux,
**caractérisé en ce que** l'éclairage est réalisé au moyen d'un laser linéaire (20, 20') et que l'étendue de la première ligne (18, 18') transversalement à l'axe longitudinal (30) du filtre multisegment (10') ou de l'assemblage (10) de segments de filtre (11-11"') est plus petite que le diamètre (D) du filtre multisegment (10') ou de l'assemblage (10) de segments de filtre (11-11'").

10. Procédé selon la revendication 9, **caractérisé en ce que** l'étendue de la première ligne (18, 18') transversalement à l'axe longitudinal (30) du filtre multisegment (10') ou de l'assemblage (10) de segments de filtre (11-11 "') est plus petite que la moitié, en particulier plus petite qu'un quart, en particulier plus petite qu'un huitième, du diamètre (D) du filtre multisegment (10') ou de l'assemblage (10) de segments de filtre (11-11"').

11. Procédé selon la revendication 9 ou 10 ou le préambule de la revendication 9, **caractérisé en ce que**, pour la réception du rayonnement électromagnétique, une deuxième ligne (16, 17) est projetée dans une direction de l'axe longitudinal sur le filtre multisegment (10') ou l'assemblage (10) de segments de filtre (11-11"') par un dispositif de réception (21, 22, 28), l'éclairage par la première ligne (18, 18') étant réalisé par un éclairage au moyen d'un laser linéaire (20, 20').

12. Procédé selon la revendication 11, **caractérisé en ce que** la deuxième ligne (16, 17) est disposée au niveau du bord du filtre multisegment (10') ou de l'assemblage (10) de segments de filtre (11-11'").

13. Procédé selon la revendication 11 ou 12, **caractérisé en ce que** la deuxième ligne (16, 17) est éloignée spatialement de la première ligne (18, 18').

14. Procédé selon la revendication 11 ou 12, **caractérisé en ce que** la deuxième ligne (16, 17) est située sur la première ligne (18, 18').

15. Procédé selon la revendication 11 ou 12, **caractérisé en ce que** deux premières lignes (18, 18') sont prévues, l'une des deux premières lignes (18, 18') étant située sur la deuxième ligne (16, 17).

16. Procédé selon la revendication 11 ou 12, **caractérisé en ce que** deux deuxièmes lignes (16, 17) sont prévues, l'une des deux deuxièmes lignes (16, 17') étant située sur la première ligne (18, 18').

17. Machine de l'industrie de transformation du tabac équipée d'un dispositif selon l'une des revendications 1 à 8.
